# EUROPEAN PATENT APPLICATION

(11) **EP 4 790 856 A1**
(43) Date of publication of application: **12.08.2026**
(21) Application number: 26156602.0
(22) Date of filing: 05.02.2026
(51) Int. Cl.: H02G 3/04, H02G 9/02, F16L 57/00, H02G 1/10, H02G 9/06

(54) **GEAR TYPE CABLE PROTECTION SYSTEM INCLUDING EMBEDDED FASTENERS**

(30) Priority: 05.02.2025 US 202563754194 P; 18.09.2025 US 202563884039 P; 15.01.2026 US 202619449808
(71) Applicant: Panduit Corp., Tinley Park, Illinois 60487 (US)
(72) Inventor: Rouleau, Rodney G., Tinley Park (US); Cheo, Francis C., Tinley Park (US); Cicero, Joseph D., Tinley Park (US); Molenhouse, Nicholas M., Tinley Park (US); Nelson, Kevin L., Tinley Park (US); Park, Nahee, Tinley Park (US); Park, Chulmin, Tinley Park (US); Shin, Jung Hoon, Tinley Park (US); Sun, Jian, Tinley Park (US); Sylvester, David J., Tinley Park (US); Szczyrk, Steven A., Tinley Park (US); Treacy, Mary G., Tinley Park (US)
(74) Representative: Sona, Alessandro

(57) **Abstract**

A cable protection system is provided that includes mating features for enabling efficient and effective assembly around a cable to be protected. The mating features provide specified hold strengths and releasable features for enabling installers to release the mating features as desired at a later time.

## Description

### CROSS-REFERENCE TO RELATED APPLICATION(S)

This application claims benefit to U.S. Provisional Patent Application No. 63/754,194, filed on February 5, 2025, and U.S. Provisional Patent Application No. 63/884,039, filed on September 18, 2025, the entirety of all of which are hereby incorporated by reference herein.

### TECHNICAL FIELD

The application relates to a cable protection system having a gear type design and other mating features to provide a more effective and efficient installation assembly process. The cable protection system may be used to protect cables intended for use in harsh environments such as subsea applications.

### BACKGROUND

Offshore energy production has been around for decades and until recently it has been typically related to oil and gas production. However, more recently renewable energy sources are becoming more common and offshore installations are popular in areas where available land may be too expensive or not available. Regardless of the type of offshore installation, power and data transmission are necessary, where cables are used for the transmission of the power and data. The cables used for offshore installations need to be protected from abrasion, sharp objects, kinks, and other environmental issues that may degrade the integrity of the cables. Typically, cable protection systems are known to utilize a segmented bell and ball cast iron system. This style of protective sleeve has proven to be effective at protecting the cables and are preferable for installations where an assembly machine is being used to automate at least some of the installation process for assembling the bell and ball system along an assembly line. However, the bell and ball cast iron system has several weaknesses such as the cast iron being heavy and requiring fasteners, which results in increased time and resources to install, as well as the cast iron material itself having the limitation of a limited lifespan in salt water and worker safety issues due to its heavy and bulky nature.

### SUMMARY

Disclosed herein are cable protection systems and methods for assembling such cable protection systems. The cable protection systems include features for enabling a more efficient installation process which may include utilizing the cable protection system into an assembly machine that feeds the cable protection system into an assembly line to automate at least part of the overall installation process.

According to some embodiments, a cable protection system including a cable protection sleeve is disclosed, the cable protection sleeve comprising a male coupling fastener comprising a first anchoring section and a first coupling section, wherein the first anchoring section is configured to be embedded within a portion of a first protective sleeve; a female coupling fastener comprising a second anchoring section and a second coupling section, wherein the second anchoring section is configured to be embedded within a portion of a second protective sleeve and the second coupling section is configured to mate with the first coupling section; and a shield configured to form a protective housing around the second coupling section.

According to some embodiments, a cable protection system including a cable protection sleeve is disclosed, the cable protection sleeve comprising a male coupling fastener comprising a first anchoring section and a first coupling section, wherein the first anchoring section is configured to be embedded within a portion of a first protective sleeve; a female coupling fastener comprising a second anchoring section and a second coupling section, wherein the second anchoring section is configured to be embedded within a portion of a second protective sleeve and the second coupling section is configured to mate with the first coupling section; and a two-piece shield comprising a shield body and a shield cap, the two-piece shield configured to form a protective housing around the second coupling section.

According to some embodiments, a cable protection system including a cable protection sleeve is disclosed, the cable protection sleeve comprising a male component comprising a first anchoring section and a pin lock, wherein the first anchoring section is configured to be embedded within a portion of a first protective sleeve; a female component comprising a second anchoring section, a lock opening, a tool opening, and a shield housing comprising a spring lock including a locking loop and a tool loop, wherein the second anchoring section is configured to be embedded within a portion of a second protective sleeve and the pin lock is configured to pass through the lock opening and lock into the locking loop; and a tool configured to pass through the tool opening and engage with the tool loop to release the pin lock from the locking loop.

According to some embodiments, a cable protection system including a cable protection sleeve is disclosed, the cable protection sleeve comprising a male component comprising a first anchoring section and a retaining tab, wherein the first anchoring section is configured to be embedded within a portion of a first protective sleeve; and a female component comprising a second anchoring section and a torsion ramp, and wherein the second anchoring section is configured to be embedded within a portion of a second protective sleeve and the retaining tab is configured to be pressed down the torsion ramp until the retaining tab moves past a bottom retaining face of the torsion ramp to reach a locked state, wherein an increasing torsion force is applied to the retaining tab as the retaining tab travels down the torsion ramp until the retaining tab moves past the bottom retaining face.

A detailed description of these and other non-limiting exemplary embodiments of the cable protection system is set forth below together with accompanying drawings.

### BRIEF DESCRIPTION OF THE DRAWINGS

FIG. 1 is a perspective view of a portion of an exemplary cable protection system including a top-side half sleeve and a bottom-side half sleeve, according to some embodiments of the present disclosure.
FIG. 2 is a magnified partial view of a male end to a half sleeve included in the cable protection system illustrated in FIG. 1, according to some embodiments of the present disclosure.
FIG. 3 is a magnified partial view of a female end to a half sleeve included in the cable protection system illustrated in FIG. 1, according to some embodiments of the present disclosure.
FIG. 4A is a perspective view of a coupling fastener system that includes a male coupling fastener, a female coupling fastener, and a two-piece shield, that is included in the cable protection system illustrated in FIG. 1, according to some embodiments of the present disclosure.
FIG. 4B is a perspective view of the female coupling fastener included in the coupling fastener system illustrated in FIG. 4A, according to some embodiments of the present disclosure.
FIG. 4C is a perspective view of a shield body included in the two-piece shield illustrated in FIG. 4A, according to some embodiments of the present disclosure.
FIG. 4D is a perspective view of the coupling fastener system illustrated in FIG. 4A in a mated state where the male coupling fastener has been installed into the female coupling fastener, according to some embodiments of the present disclosure.
FIG. 4E. is a perspective view showing a portion A where the female coupling fastener shown in FIG. 4A is installed within a half sleeve from the cable protection system illustrated in FIG. 1, according to some embodiments of the present disclosure.
FIG. 5A is a perspective view of a coupling fastener system that includes a male coupling fastener, a female coupling fastener, and a single-piece shield, that may be included in a cable protection system, according to a second embodiment of the present disclosure.
FIG. 5B is a perspective view of the single-piece shield illustrated in FIG. 5A, according to the second embodiment.
FIG. 5C is a perspective view of the coupling fastener system illustrated in FIG. 5A in a mated state where the male coupling fastener has been installed into the female coupling fastener, according to the second embodiment.
FIG. 5D is a perspective view showing a portion B where the female coupling fastener shown in FIG. 5A is installed within a half sleeve from the exemplary cable protection system, according to the second embodiment.
FIG. 6 is a perspective view of an exemplary releasable fastener system that includes a male fastener, a female fastener, and a release tool, that may be included in a cable protection system, according to a third embodiment of the present disclosure.
FIG. 7 is an exploded perspective view of the female fastener illustrated in FIG. 6, according to the third embodiment of the present disclosure.
FIG. 8 is a perspective view of the releasable fastener system illustrated in FIG. 6 in a mated state where the male fastener has been installed into the female fastener, according to the third embodiment of the present disclosure.
FIG. 9 is a perspective view of the releasable fastener system illustrated in FIG. 6 where the release tool is being utilized to release the male fastener from its mated state with the female fastener, according to the third embodiment of the present disclosure.
FIG. 10 is a perspective view showing a portion of a half sleeve from the exemplary cable protection system where the female fastener illustrated in FIG. 6 may be installed, according to the third embodiment of the present disclosure.
FIG. 11 is a perspective view of a torsional fastening system including a male fastener and a female fastener, that may be included in an exemplary cable protection system, according to a fourth embodiment of the present disclosure.
FIG. 12 is a perspective view of the torsional fastening system in a partially mated state where the male fastener is partially installed into the female fastener, according to the fourth embodiment of the present disclosure.
FIG. 13 is a perspective view of the torsional fastening system in another partially mated state where the male fastener is partially installed into the female fastener at a maximum torsion position, according to the fourth embodiment of the present disclosure.
FIG. 14 is a perspective view of the torsional fastening system in a fully mated state where the male fastener is fully installed into the female fastener, according to the fourth embodiment of the present disclosure.
FIG. 15 is a perspective view showing a portion of the exemplary cable protection system where a top-side half sleeve including the male fastener is not yet in the mated state with the female fastener included in a bottom-side half sleeve, according to the fourth embodiment of the present disclosure.
FIG. 16 is a perspective view showing a portion of the exemplary cable protection system where the top-side half sleeve including the male fastener is in the fully mated state with the female fastener included in the bottom-side half sleeve, according to the fourth embodiment of the present disclosure.
FIG. 17 is a perspective view of a fastening system including a male fastener and a female fastener, shown in a mated state, that may be included in an exemplary cable protection system, according to a fifth embodiment of the present disclosure.
FIG. 18 is a perspective view of the fastening system shown in FIG. 17, where an outer protective sleeve has been removed, according to the fifth embodiment of the present disclosure.
FIG. 19 is an exploded view of the fastening system shown in FIG. 18, according to the fifth embodiment of the present disclosure.
FIG. 20 is a perspective view of a female component included in the fastening system shown in FIG. 17, according to the fifth embodiment of the present disclosure.
FIG. 21 is a perspective view of a releasable locking spring included in the fastening system shown in FIG. 17, according to the fifth embodiment of the present disclosure.
FIG. 22 is a perspective view of a male component included in the fastening system shown in FIG. 17, according to the fifth embodiment of the present disclosure.
FIG. 23 is a perspective view of a release tool that may be used to release the fastening system shown in FIG. 17 from the mated state, according to the fifth embodiment of the present disclosure.
FIG. 24 is a perspective view of the release tool being utilized to release the fastening system shown in FIG. 17 from the mated state, according to the fifth embodiment of the present disclosure.

### DETAILED DESCRIPTION

Disclosed herein are novel cable protection systems including embedded fastener systems and methods for installing such cable protection systems that offer improved installation efficiency and physical attributes over previously known cable protection systems. As required, detailed non-limiting embodiments for the cable protection systems are disclosed herein. However, it is to be understood that the disclosed embodiments are merely exemplary and may take various and alternative forms. The figures are not necessarily to scale, and features may be exaggerated or minimized to show details of particular components. Therefore, specific structural and functional details disclosed herein are not to be interpreted as limiting, but merely as a representative basis for teaching one skilled in the art.

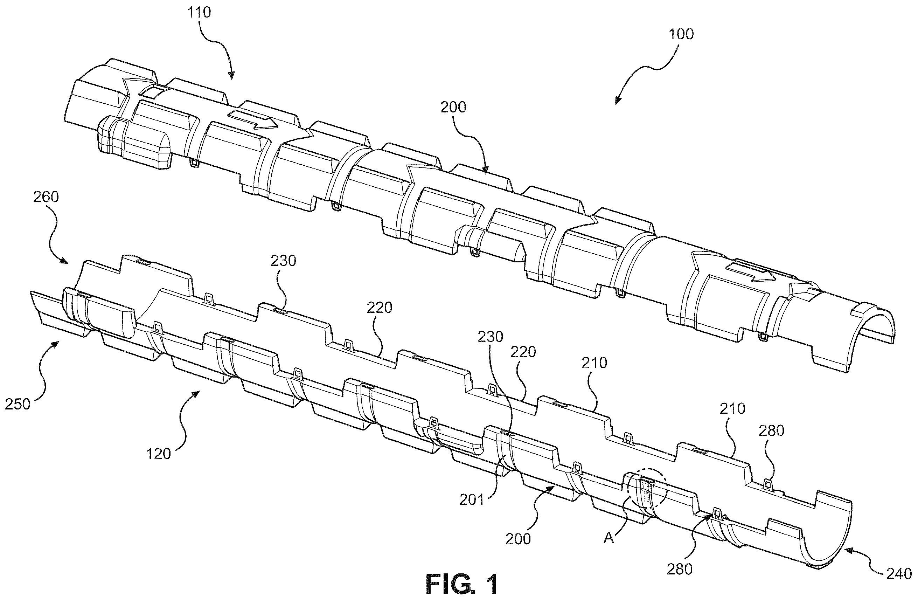

FIG. 1 shows an exemplary cable protection system 100 according to an embodiment of this disclosure. The cable protection system 100 includes a top row 110 of half sleeves 200, and a bottom row 120 of half sleeves 200, where the half sleeves 200 include a gear type structural design for mating together to cover and protect around a cable or other elongated object. According to some embodiments, the cable protection system 100 comprising the half sleeves 200 may be manually assembled to cover and protect an object (e.g., cable) from environmentally challenging locations such as subsea installations. According to other embodiments, the half sleeves 200 may be assembled, at least in part, using a mechanical machine for powering an assembly line with rollers to automate, or at least semi-automate, a process for traveling the half sleeves 200 to cover and protect the cable as it travels along the assembly line, as will be described in more detail below. The half sleeves 200 may be made from a polyurethane, or other similar polymer material. According to some embodiments, portions of the half sleeves 200 may include metal components. For example, metal components may be embedded within certain portions of the half sleeves 200 to provide additional structural stability, and/or increase weight of the half sleeves 200.

As shown in FIG. 1, the half sleeve 200 from the top row 110 and the half sleeve 200 from the bottom row 120 may be mated together to form the cable protection system 100. For example, a half sleeve 200 from the top row 110 may be mated with a half sleeve 200 from the bottom row 120 to cover and protect a portion of the cable within an inner housing 260 that is formed when the two half sleeves 200 are mated together.

The half sleeve 200 is configured generally in a half tube shape, with gear shaped protrusions (i.e., teeth) and openings (i.e., voids for receiving corresponding teeth). For example, the half sleeve 200 includes trapezoidal-shaped protrusions 210 and trapezoidal-shaped openings 220 along the walls. Then a mating process may include the protrusions 210 from a half sleeve 200 in the top row 110 mating with corresponding openings 220 from a half sleeve 200 in the bottom row 120, and protrusions 210 from the half sleeve 200 in the bottom row 120 mating with the corresponding openings 220 from the half sleeve 200 in the top row 110. The trapezoidal shape of these mating features (e.g., the protrusions 210 and the openings 220) on the half sleeves 200 are one of the exemplary solutions offered by the cable protection system 100 for enabling faster and more efficient installation. Although the mating features are shown and/or described as having the trapezoidal shape, other interlocking shapes (e.g., rectangular or triangular shapes) may also be utilized for the protrusions 210 and the openings 220 that comprise the exemplary mating features.

The half sleeve 200 may also include a recessed channel 201 for installing a cable tie or strap over two mated half sleeves 200. The half sleeve 200 also includes a female end 240 and a male end 250 that also include mating features, as will be described in more detail below.

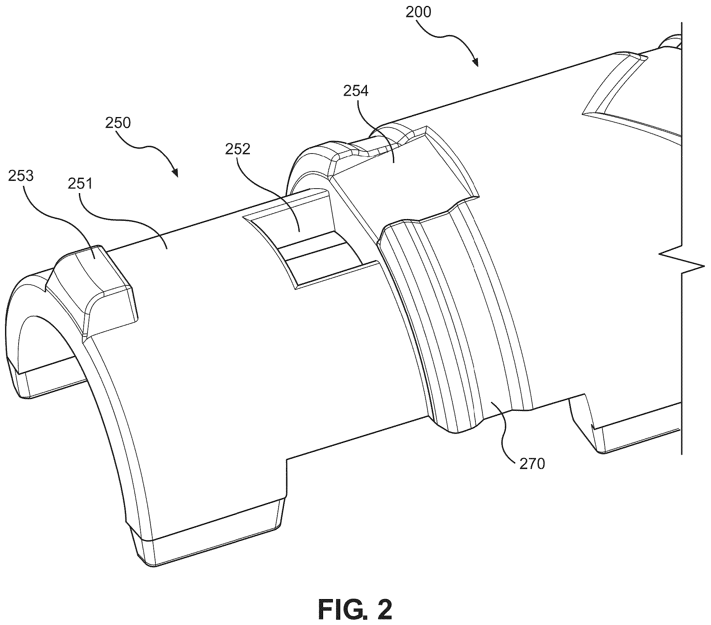

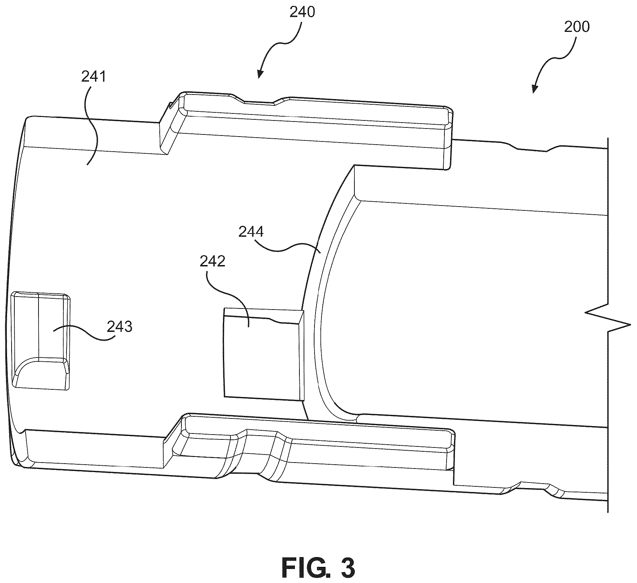

FIG. 2 shows a magnified partial view of the half sleeve 200 that includes the male end 250, and FIG. 3 shows a magnified partial view of the half sleeve 200 that includes the female end 240. The male end 250 includes a male body 251, where the male body 251 includes both a hook 253 and a thru hole 252. The hook 253 may be a chamfered shaped protrusion positioned at a far end of the male body 251, while the thru hole 252 is positioned at an inner end of the male body 251 closest to the main body of the half sleeve 200. The male end 250 also includes a ramp 254 which may be used to guide a hook 243 found on the female end 240 into the thru hole 252, as will be described in more detail below. The male end 250 also includes a channel 270 adjacent to the male body 251, where a tie or strap may be installed around the half sleeve 200 within the channel 270. The channel 270 is shown to be adjacent to the male body 251, with additional channels being placed along a length of the half sleeves 200.

According to some embodiments the male body 251 may have straight cylindrical side walls as illustrated in FIG. 2, or according to some alternative embodiments the male body 251 may have a tapered dovetail shape that is wider at an outer end compared to an inner end.

FIG. 3 shows an underside of a female body 241 comprising the female end 240 of the half sleeve 200, where the underside of the female body 241 includes a hook 243 and a thru hole 242. According to this embodiment, the hook 243 may be a chamfered shaped protrusion positioned at a far end of the female body 241, while the thru hole 242 is positioned at an inner end of the female body 241 closest to the main body of the half sleeve 200. The female end 240 may also include a beveled face 244.

An exemplary assembly process may include the female end 240 of a first half sleeve 200 being configured to fall down on top of the male end 250 of a second half sleeve 200 to mate the first and second half sleeves 200 (e.g., top row 110 half sleeve 200 and bottom row 120 half sleeve 200) together. To form the mating connection, the hook 243 from the female end 240 is configured to fall down into the thru hole 252 of the male end 250, and the hook 253 from the male end 250 is configured to fit up into the thru hole 242 of the female end 240 when the female end 240 falls down on top of the male end 250 during the described assembly process.

According to some embodiments the female body 241 may have straight cylindrical side walls as illustrated in FIG. 3, or according to some alternative embodiments the female body 241 may have a tapered dovetail shape to match a tapered dovetail shape of the male body 251, such that a width of the female body 241 is narrower at a far end and wider at an opposite end closer to the inner end.

The half sleeves 200 used in the cable protection system 100 are configured to include embedded fasteners, according to different embodiments of the present disclosure. For example, FIG. 1 shows female coupling fasteners 230 that are molded into the protrusions 210 and male coupling fasteners 280 that are molded into the openings 220. This disclosure will first describe the embedded coupling fastener system according to a first embodiment that includes the female coupling fasteners 230 and the male coupling fastener 280. However, other types of embedded fastener systems are also within the scope of this disclosure, as will be described in more detail.

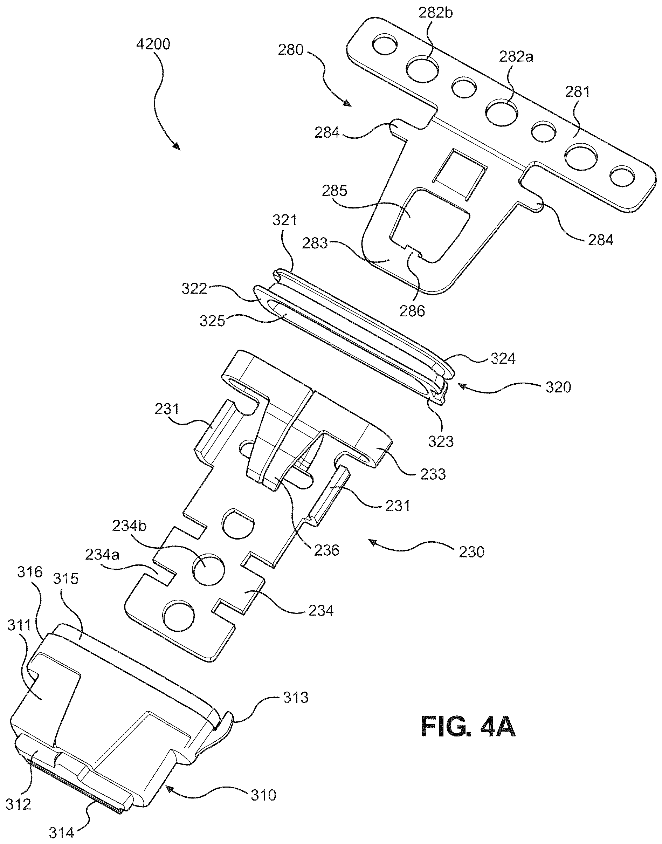

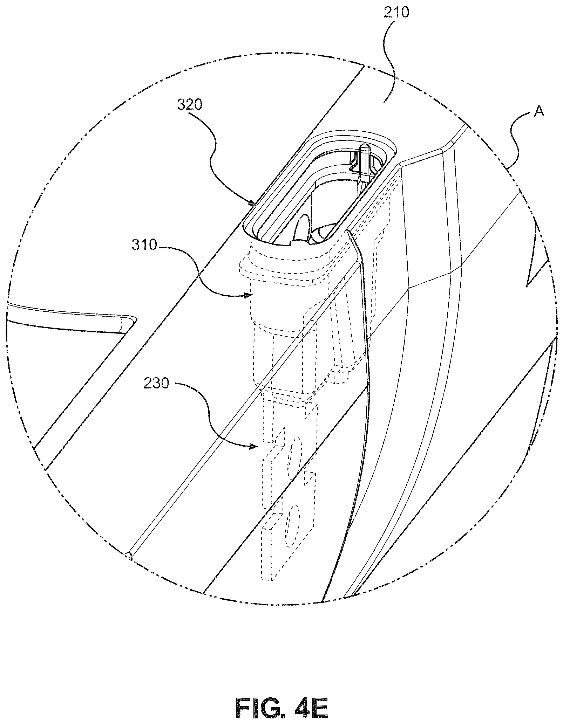

FIG. 4A shows an isolated perspective view of a coupling fastener system 4200 that includes the female coupling fastener 230 and the male coupling fastener 280 previously shown as being molded into the half sleeves 200 in FIG. 1. The coupling fastener system 4200 further includes a two-piece shield 310, 320 that is comprised of a shield body 310 and a shield cap 320.

The male coupling fastener 280 includes fastener tip 283, where the fastener tip 283 includes a window 285 having protruding portion referred to as a retaining tab 286. The male coupling fastener 280 also includes stop ears 284 and an anchoring section 281. The anchoring section 281 includes one or more openings 282a, 282b, where the openings may include two or more different sized openings 282a, 282b where a first opening 282a is smaller than a second opening 282b. According to some embodiments, the openings 282a, 282b may be the same size. Although the openings 282a, 282b are shown to be circular, they may be made into different shapes (e.g., square or triangle, or an irregular shape) according to other embodiments. The anchoring section 281 is embedded within the material (e.g., polyurethane) of the half sleeve 200 and provides an anchoring strength to keep the male coupling fastener 280 embedded within the molded openings 220 of the half sleeve 200 as the molded material works through the openings 282a, 282b. So, the openings 282a, 282b are included to provide increased pull-out strength to the male coupling fastener 280.

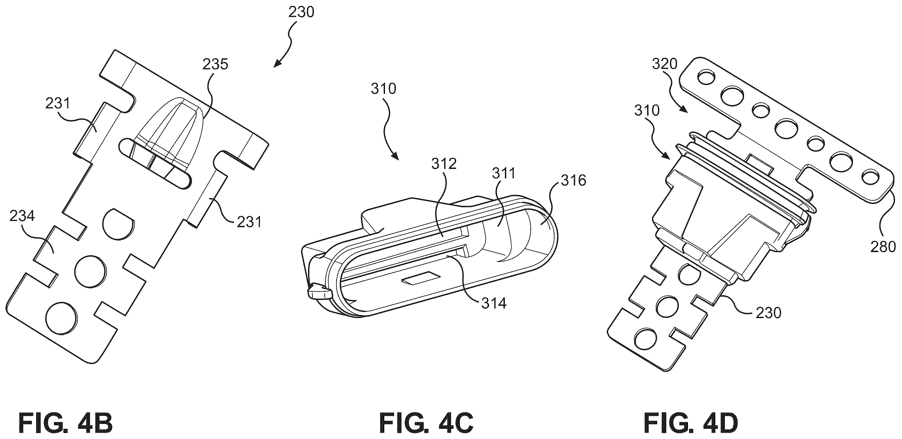

The female coupling fastener 230 includes an upper collar 233, strengthening ribs 231, locating springs 236, and an anchoring section 234. As shown in more detail from the rear-side view of the female coupling fastener 230 in FIG. 4B, the female coupling fastener 230 further includes a louver 235 that protrudes out towards the front-side of the female coupling fastener 230 where the locating springs 236 are located. To complete the coupling function between the male coupling fastener 280 and the female coupling fastener 230, the fastener tip 283 is inserted down through the upper collar 233 until the retaining tab 286 passes over the louver 235 such that the retaining tab 286 sits under a lower edge of the louver 235 that protrudes into the window 285, thus forming a locking function. When the fastener tip 283 is fully inserted into the female coupling fastener 230, the fastener tip 283 may abut against, and not go past, the locating springs 236.

The anchoring section 234 includes one or more notches 234a and one or more holes 234b that are configured to be immersed in the molded material of the half sleeve, where the shape and configuration of the notches 234a and the holes 234b provide an anchoring strength to keep the female coupling fastener 230 embedded within the molded protrusion 210 of the half sleeve 200 as the molded material works through the notches 234a and the holes 234b. It follows that the one or more notches 234a and the one or more holes 234b may improve pullout strength. Although the holes 234b are shown to be circular, they may be made into different shapes (e.g., square or triangle, or an irregular shape) according to other embodiments. Although the notches 234a are shown to form rectangular sawtooth shapes, other shapes (e.g., semi-circular, triangular, or other usable shape) may be used according to other embodiments.

The shield body 310 includes a shield housing 311, an overflow reservoir 312, an alignment tab 313, a lower fastener seal 314, a top ridge 315, and a holding ridge 316. The shield cap 320 includes a lower opening 325, a retaining shelf 322, an alignment groove 323, and an upper cap ridge 324. As shown in FIG. 4D where the coupling fastener system 4200 is in a mated state, the shield body 310 and the shield cap 320 are configured to come together to form a shield over the female coupling fastener 230. To assist in mating the shield body 310 and the shield cap 320 together, the alignment groove 323 is configured to fit over the alignment tab 313 to guide the shield cap 320 and the shield body 310 together. Furthermore, the top ridge 315 is configured to fit tightly into the lower opening 325 of the shield cap 320 to ensure a proper seal is formed between the connection point that is formed when the shield body 310 and the shield cap 320 are mated together.

The female coupling fastener 230 is configured to fit into the shield body 310. For example, the anchoring section 234 is pushed through the shield housing 311 and out the lower fastener seal 314. The lower fastener seal 314 may be an opening that is sized so that as the anchoring section 234 is pushed through the lower fastener seal 314, the lower fastener seal 314 forms a tight seal around the anchoring section 234 of the female coupling fastener 230 to prevent the ingress of any material (e.g., polyurethane) from entering inside the shield housing 311 through the lower fastener seal 314 during the molding process of the half sleeve 200. The tight fit of the opening that comprises the lower fastener seal 314 is shown by the view looking into the shield housing 311 provided in FIG. 4C.

When the female coupling fastener 230 is fully inserted into the shield body 310, the strengthening ribs 231 sit within the shield housing 311 and the upper collar 233 of the female coupling fastener 230 is resting within the holding ridge 316 of the shield body 310. The shield cap 320 is further installed to cover a portion of the upper collar 233 of the female coupling fastener 230 such then when the half sleeve 200 is fully molded, the shield cap 320 is level with, or slightly above, a level of the half sleeve 200 where the female coupling fastener 230 is installed (e.g., the protrusion 210) so that material does not fall into the cavity formed by the two-piece shield 310, 320.

In this way, the two-piece shield 310, 320 may assist in maintaining the coupling features of the female coupling fastener 230 (e.g., the louver 235 and locating springs 236) are not disturbed or inhibited during the manufacturing process such as during molding of the half sleeve 200 and/or embedding of the female coupling fastener 230 into the half sleeve 200. For example, the protective two-piece shield 310, 320 may stop ingress of molten and/or flowable resin/polymer/plastic/polyurethane that comprises the half sleeve 200 during the molding manufacture process. For any small amounts of the material that makes its way into the shield body 310, this amount may be contained within the overflow reservoir 312, as shown in more detail by the inside view of the shield body 310 provided by FIG. 4C. This way, the material may stay within the overflow reservoir 312 and not interfere with the coupling features of the female coupling fastener 230 so that they may be free to receive and lock in the male coupling fastener 280.

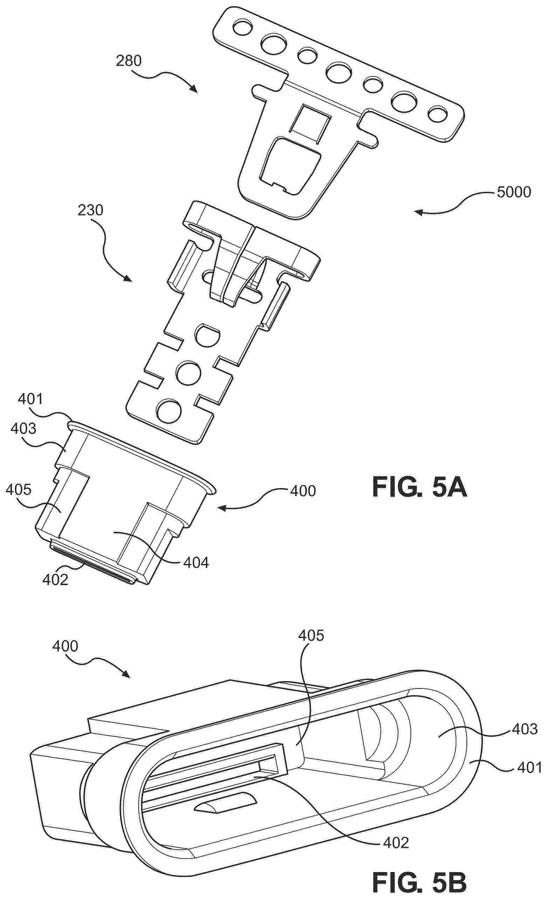

FIG. 5A shows a perspective view to an alternative coupling fastener system 5000, according to a second embodiment. The coupling fastener system 5000 utilizes a single-piece shield body 400 to shield the same female coupling fastener 230, where the female coupling fastener 230 is configured to mate with the same male coupling fastener 280 as described earlier.

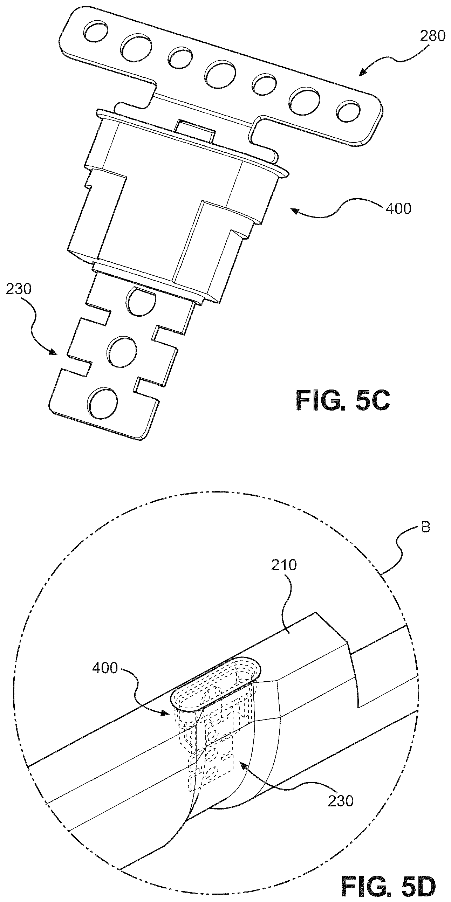

The single-piece shield body 400 incudes a top flange 401, a holding ridge 403, a shield housing 404, an overflow reservoir 405, and a lower fastener seal 402. As shown in FIG. 5C where the coupling fastener system 5000 is in a mated state, the single-piece shield body 400 is configured to come together to form a shield over the female coupling fastener 230.

The female coupling fastener 230 is configured to fit into the single-piece shield body 400. For example, the anchoring section 234 is pushed through the shield housing 404 and out the lower fastener seal 402. The lower fastener seal 402 may be an opening that is sized so that as the anchoring section 234 is pushed through the lower fastener seal 402, the lower fastener seal 402 forms a tight seal around the anchoring section 234 of the female coupling fastener 230 to prevent the ingress of any material (e.g., polyurethane) from entering inside the shield housing 404 through the lower fastener seal 402 during the molding process of the half sleeve 200. The tight fit of the opening that comprises the lower fastener seal 402 is shown by the view looking inside the shield housing 404 provided in FIG. 5B.

When the female coupling fastener 230 is fully inserted into the single-piece shield body 400, the strengthening ribs 231 sit within the shield housing 404 and the upper collar 233 of the female coupling fastener 230 is resting within the holding ridge 403 of the single-piece shield body 400. The top flange 401 is configured to cover a portion of the upper collar 233 of the female coupling fastener 230 such then when the half sleeve 200 is fully molded, the top flange 401 is level with, or slightly above, a level of the half sleeve 200 where the female coupling fastener 230 is installed (e.g., the protrusion 210) so that material does not fall into the cavity formed by the single-piece shield body 400.

In this way, the single-piece shield body 400 may assist in maintaining the coupling features of the female coupling fastener 230 (e.g., the louver 235 and locating springs 236) are not disturbed or inhibited during the manufacturing process such as during molding of the half sleeve 200 and/or embedding of the female coupling fastener 230 into the half sleeve 200. For example, the protective single-piece shield body 400 may stop ingress of molten and/or flowable resin/polymer/plastic/polyurethane that comprises the half sleeve 200 during the molding manufacture process. For any small amounts of the material that makes its way into the single-piece shield body 400, this amount may be contained within the overflow reservoir 405, as shown in more detail by the inside view of the single-piece shield body 400 provided by FIG. 5B. This way, the material may stay within the overflow reservoir 405 and not interfere with the coupling features of the female coupling fastener 230 so that they may be free to receive and lock in the male coupling fastener 280. FIG. 5D shows a portion B from a half sleeve 200 according to the second embodiment where the single-piece shield body 400 is utilized to shield the female coupling fastener 230.

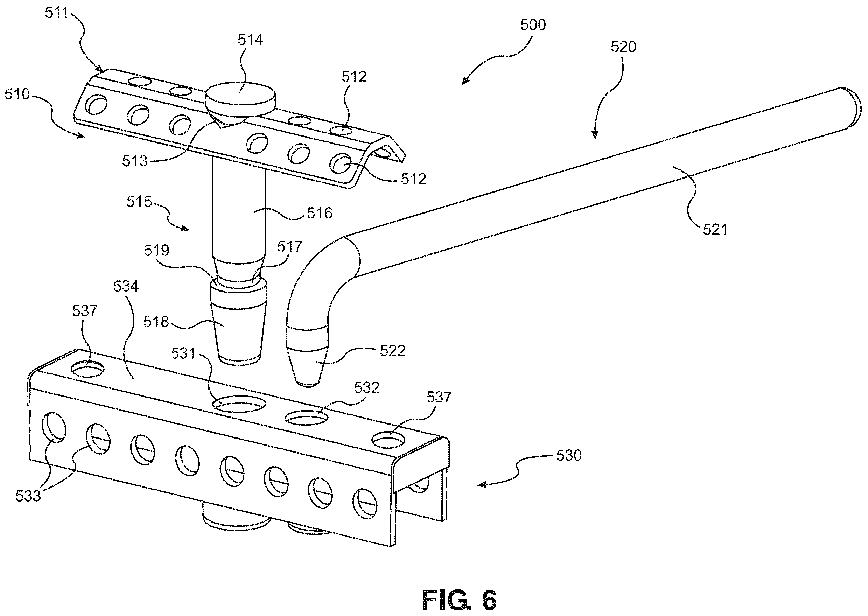

FIG. 6 shows a perspective view of an exemplary releasable fastener system 500 that may be included in a half sleeve 700 to replace the male coupling fastener 280 and the female coupling fastener 230, according to a third embodiment, where the half sleeve 700 is the same as the half sleeve 200 described herein other than the releasable fastener system 500 replacing the coupling fastener system 4200.

The releasable fastener system 500 includes a male component 510, a female component 530, and a tool 520. The tool 520 includes a lever 521 and a tool head 522. The male component 510 including an anchor 511 and a pin latch 515. The anchor 511 includes a plurality of anchoring openings 512 and a stop opening 513. The anchor 511 is configured to be embedded within the half sleeve 700, and the anchoring openings 512 are configured to provide increased pull-out holding strength as the material of the half sleeve 700 is molded around and through the anchoring openings 512. The anchoring openings 512 are configured in a circular shape, although the anchoring openings 512 may be provided in different shapes (e.g., squares or triangles, or an irregular shape) according to other embodiments.

The pin latch 515 includes a pin top 514, a pin column 516, a pin head 518, and a locking cross-section 517. The pin head 518 includes a ridge 519 formed by the cross-section 517 having a smaller diameter than the pin column 516 and the pin head 518, and the pin head 518 includes a sloped conical shape. The pin top 514 is configured to have a diameter that is larger than the stop opening 513. This way, the pin column 516 and the pin head 518 may be fit through the stop opening 513 until the pin top 514 abuts against the stop opening 513 that prevents the pin latch 515 from sliding through the stop opening 513 and holds the pin latch 515 in an installed position to keep during the molding process for the half sleeve 700.

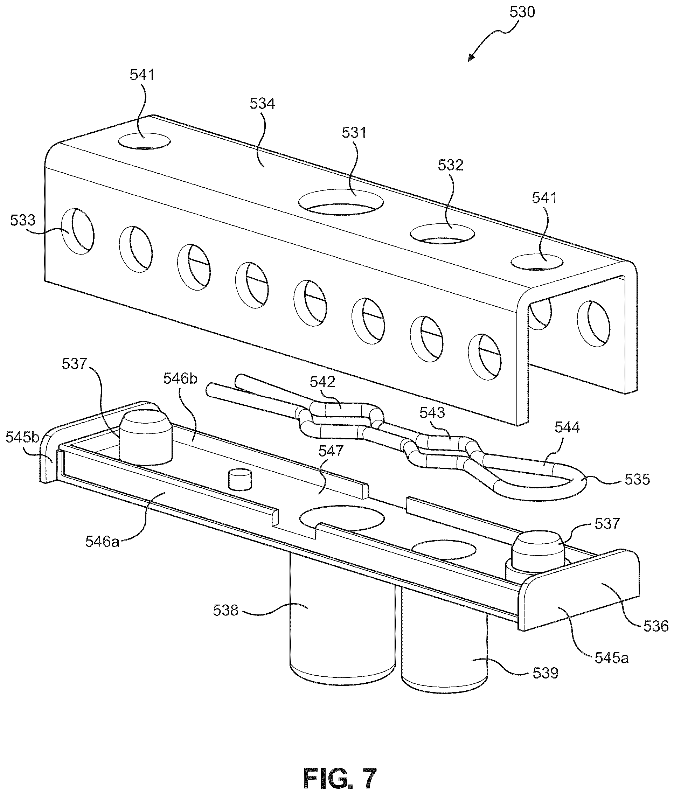

The releasable fastener system 500 also includes a female component 530. As shown by the exploded view of the female component 530 shown in FIG. 7, the female component 530 includes a locking plate 534, a locking spring 535, and a shield 536. The locking plate 534 includes press-fit openings 541 at opposite ends, a pin opening 531 having a diameter to allow the pin head 518 pass through, and a tool opening 532 having a diameter to allow the tool head 522 to pass through.

The locking plate 534 also includes a plurality of anchoring openings 533 configured in a circular shape, although the anchoring openings 533 may be provided in different shapes (e.g., squares or triangles, or an irregular shape) according to other embodiments. When the female component 530 is embedded within the material (e.g., polyurethane) of the half sleeve 700, the anchoring openings 533 provide an anchoring strength to keep the female component 530 embedded within the half sleeve 700 as the molded material works through the anchoring openings 533. So, the anchoring openings 533 are included to provide increased pull-out strength to the female component 530.

The shield 536 includes walls 545a, 545b, 546a, 546b, a bottom floor 547, a pin housing 538 that opens up from the bottom floor 547, a tool housing 539 that opens up from the bottom floor 547, and press-fit protrusions 537 that come up from the bottom floor 547. The shield 536 is configured to be press-fit together with the locking plate 534, as shown in FIG. 6, by pressing the press-fit protrusions 537 up into the press-fit openings 541 on the locking plate 534. When the shield 536 and the locking plate 534 are pressed together like this, the walls 545a, 545b, 546a, 546b and the bottom floor 547 of the shield 536 help form a sealed housing with the locking plate 534. Inside this sealed housing, the locking spring 535 is housed and aligned by having an alignment loop 544 fit around one of the press-fit protrusions 537. The locking spring 535 also includes a locking loop 542 and a tool loop 543. When installed within the shield, the locking spring 535 aligns so that the locking loop 542 is positioned between the pin opening 531 from the locking plate 534 and the opening to the pin housing 538 from the shield 536, and the tool loop 543 is positioned between the tool opening 532 from the locking plate 534 and the opening to the tool housing 539 from the shield 536.

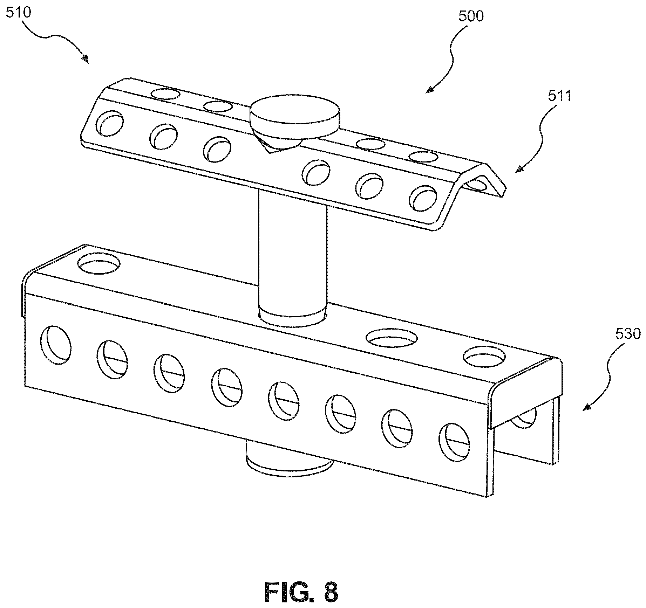

FIG. 8 shows a perspective view of the releasable fastener system 500 in a fully mated state. In this mated state, the pin head 518 has been inserted through the pin opening 531 such that the cross-section 517 is locked into the locking loop 542 and the pin head 518 rests, at least in part, within the pin housing 538.

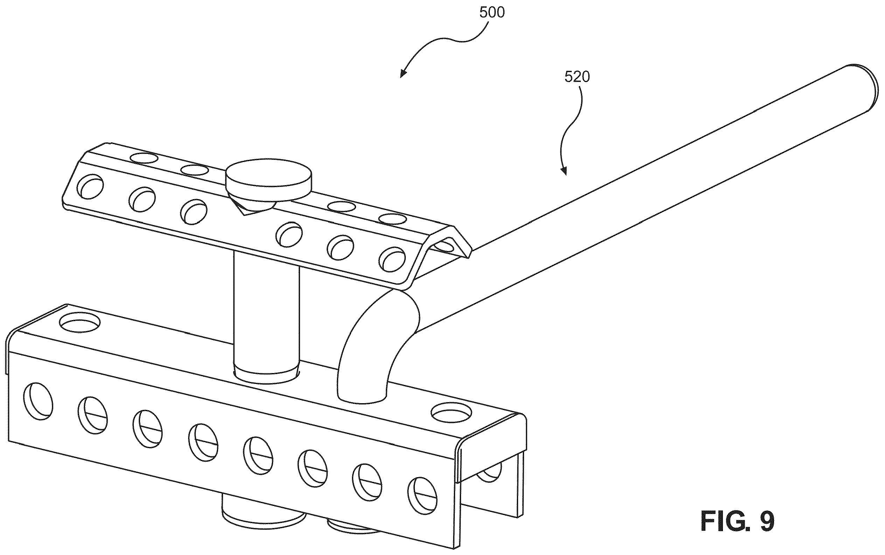

FIG. 9 shows a perspective view of the releasable fastener system 500, where the tool 520 is being utilized to release the pin head 518 from the locking loop 542. To accomplish this releasing function, the tool head 522 is inserted through the tool opening 532 and into the tool loop 543 of the locking spring 535. By pushing the tool head 522 into the tool loop 543, this forces the locking loop 542 to expand enough to allow the pin head 518 to be released from the locking loop 542 and pulled back up through the pin opening 531.

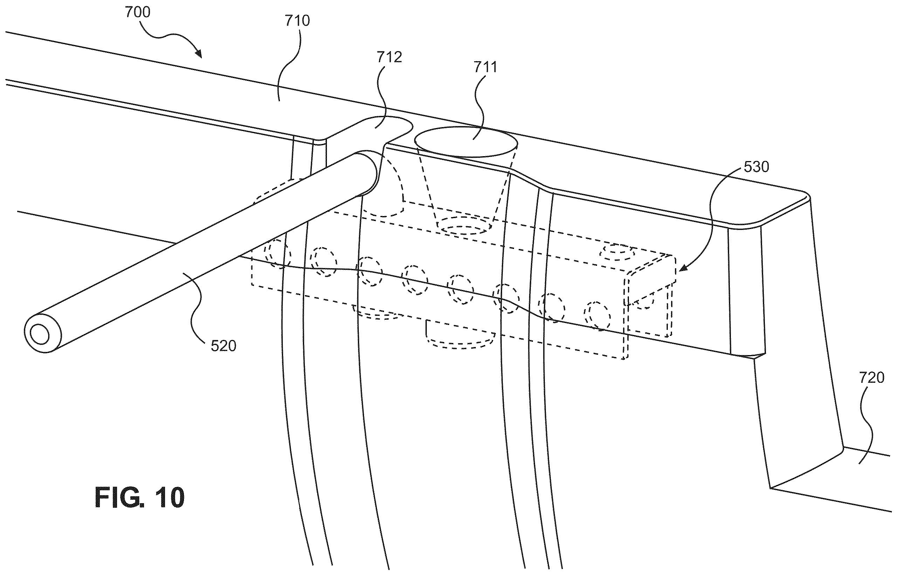

FIG. 10 shows a partial view of the half sleeve 700 having the female component 530 embedded within a protrusion 710 portion of the half sleeve 700. The protrusion 710 portion is shown to include a conically shaped pin entry 711 and a conically shaped tool entry 712, where the conically shaped tool entry 712 has a side cut-out to enable the tool 520 to be pressed down into the tool opening 532, as shown. The conically shaped pin entry 711 and/or the conically shaped tool entry 712 may be molded in this shape during the molding process for the half sleeve 700. In addition, or alternatively, a shield may be used to form the conically shaped pin entry 711 and/or the conically shaped tool entry 712. Although not shown, the male component 510 would be embedded within the opening 720 portion in the half sleeve 700.

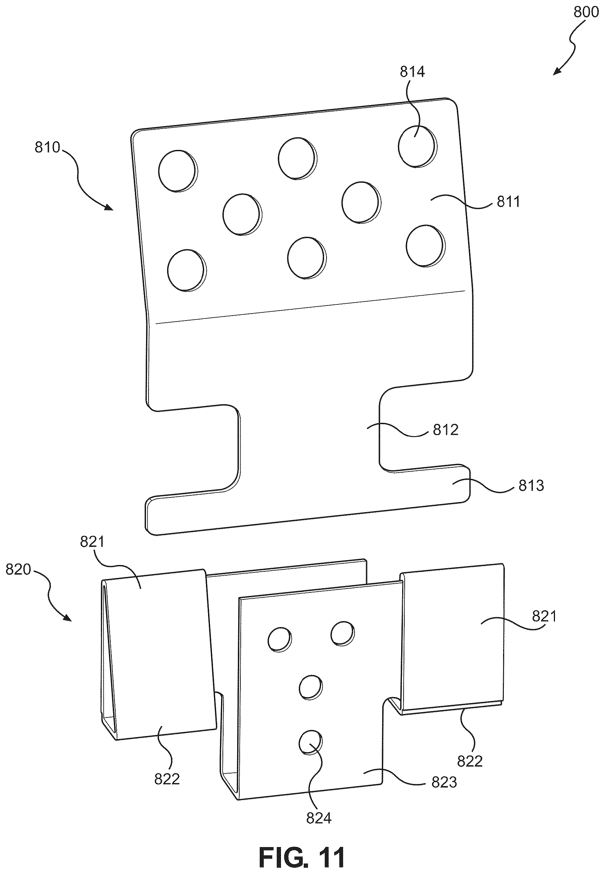

FIG. 11 shows a perspective view of an exemplary torsional fastener system 800 that may be included in a half sleeve 900 to replace the male coupling fastener 280 and the female coupling fastener 230, according to a fourth embodiment, where the half sleeve 900 is the same as the half sleeve 200 described herein other than the torsional fastener system 800 replacing the coupling fastener system 4200.

The torsional fastener system 800 includes a male component 810 and a female component 820. The male component includes an anchoring section 811 that is comprised of one or more anchor openings 814. The anchoring openings 814 are configured in a circular shape, although the anchoring openings 814 may be provided in different shapes (e.g., squares or triangles, or an irregular shape) according to other embodiments. The anchoring section 811 is configured to be embedded within the half sleeve 900, and the anchoring openings 814 are configured to provide increased pull-out holding strength as the material of the half sleeve 900 is molded around and through the anchoring openings 814. The male component 810 further includes a torsion region 812 and retaining tabs 813.

The female component 820 includes torsion ramps 821 that are configured in a ramped shape that starts thinner at a top and gradually becomes wider at a bottom of the torsion ramps 821 where retaining faces 822 are provided. The female component 820 also includes an anchoring section 823, where the anchoring section 823 includes one or more anchor openings 824. The anchoring openings 824 are configured in a circular shape, although the anchoring openings 824 may be provided in different shapes (e.g., squares or triangles, or an irregular shape) according to other embodiments. The anchoring section 823 is configured to be embedded within the half sleeve 900, and the anchoring openings 824 are configured to provide increased pull-out holding strength as the material of the half sleeve 900 is molded around and through the anchoring openings 824.

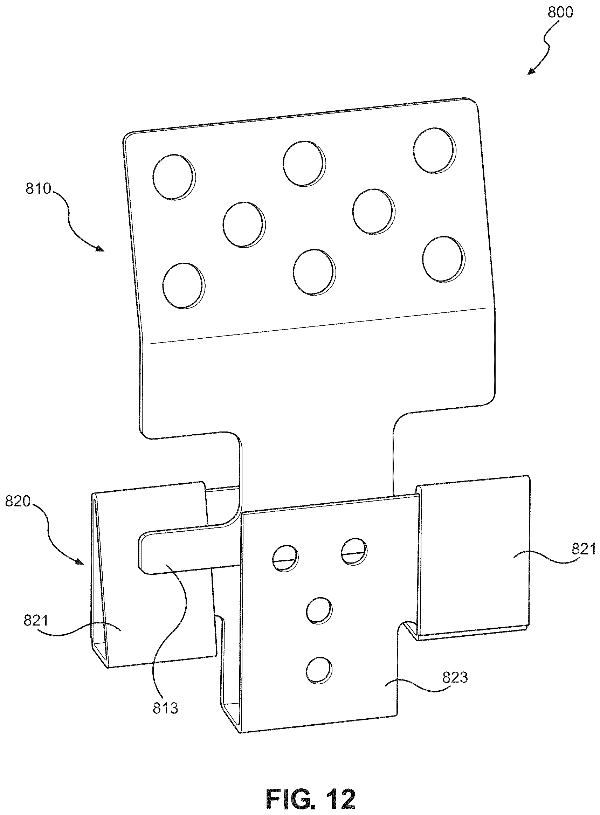

FIG. 12 shows the torsional fastener system 800 in a first insertion state where the retaining tabs 813 from the male component 810 have started to be inserted into the torsion ramps 821 in the female component 820. The angled sides of the torsion ramps 821 are positioned to face each other so that the retaining tabs 813 slides down between the two angled sides of the torsion ramps 821.

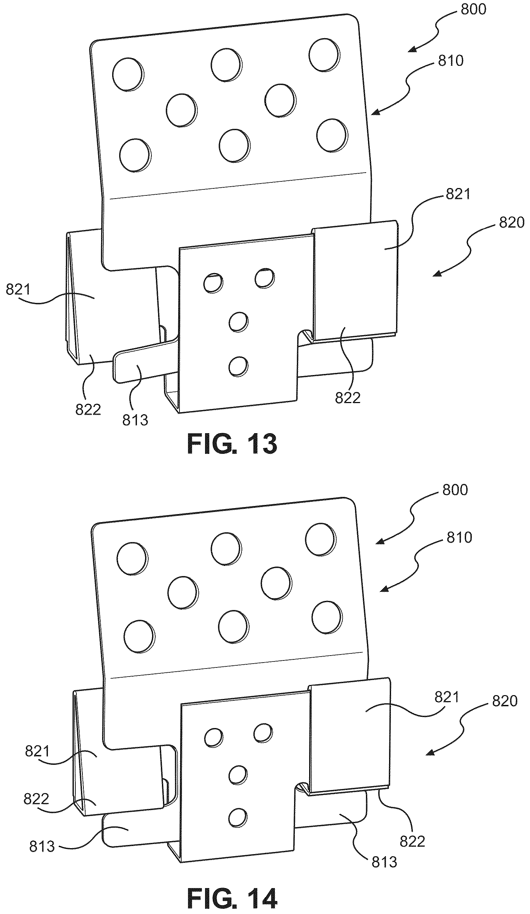

FIG. 13 shows the torsional fastener system 800 in a second insertion state where the retaining tabs 813 from the male component 810 have made their way down to the bottom of the torsion ramps 821 in the female component 820 to be held between the retaining faces 822. In this position, the torsion ramps 821 are exerting a maximum force against the retaining tabs 813, just prior to the retaining tabs 813 falling down to a locked state.

FIG. 14 shows the torsional fastener system 800 in a locked state where the retaining tabs 813 from the male component 810 have made their way down to the bottom of the torsion ramps 821 in the female component 820 to be held in a locked position below the retaining faces 822. In this position, the retaining tabs 813 are in a locked state below the retaining faces 822 which have flexed back towards each other to close off a release path above the retaining tabs 813.

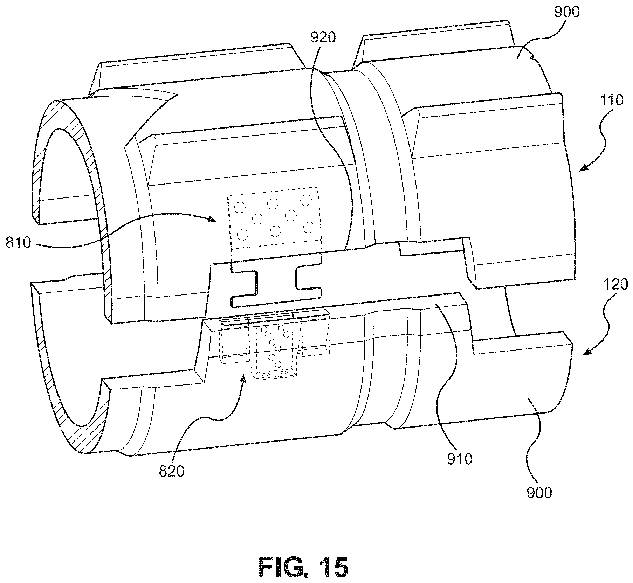

FIG. 15 shows the torsional fastener system 800 embedded into the half sleeves 900. For example, the male component 810 is shown embedded into the half sleeve 900 located on the top row 110, while the female component 820 is shown embedded into the half sleeve 900 located on the bottom row 120. The half sleeves 900 from the top row 110 and the bottom row 120 have not yet been mated together, and thus the torsional fastener system 800 is not yet in the locked state.

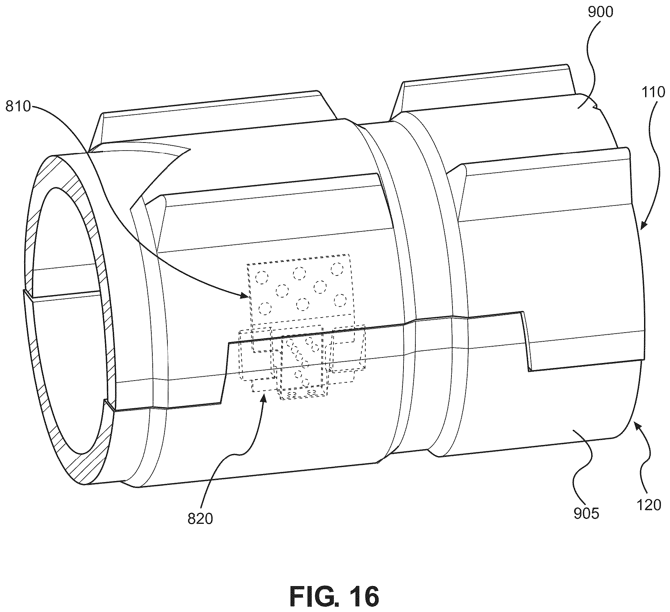

FIG. 16 shows the torsional fastener system 800 embedded into the half sleeves 900, where the half sleeves 900 from the top row 110 and the bottom row 120 have been mated together, and thus the torsional fastener system 800 is in the locked state. For example, the male component 810 is shown embedded into the opening portion 920 of the gear shaped half sleeve 900 located on the top row 110, while the female component 820 is shown embedded into the protrusion portion 910 of the gear shaped half sleeve 900 located on the bottom row 120.

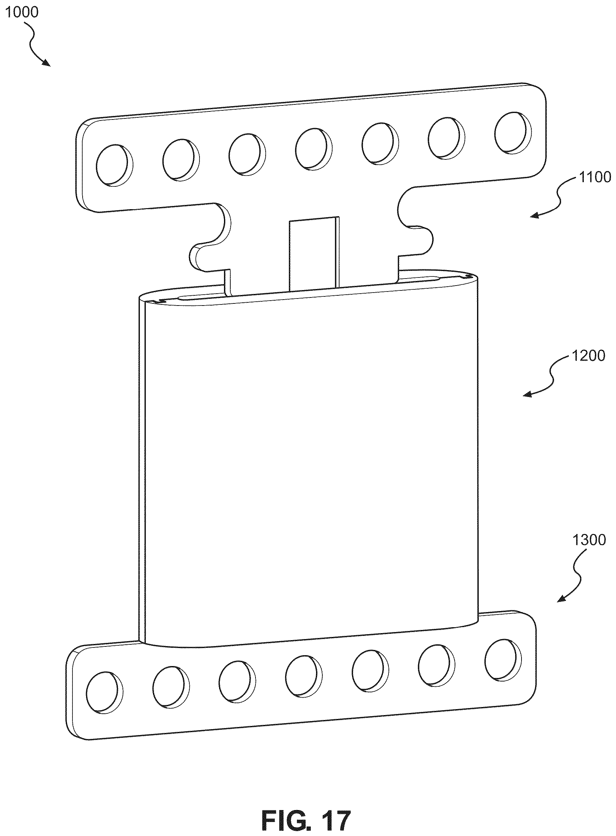

FIG. 17 shows a perspective view of a fastener system 1000, according to a fifth alternative embodiment of the present disclosure. The fastener system 1000 shown in FIG. 17 is configured in a locked state. The fastener system 1000 is configured to be a releasable spring lock type of fastener system, as will be described in more detail below.

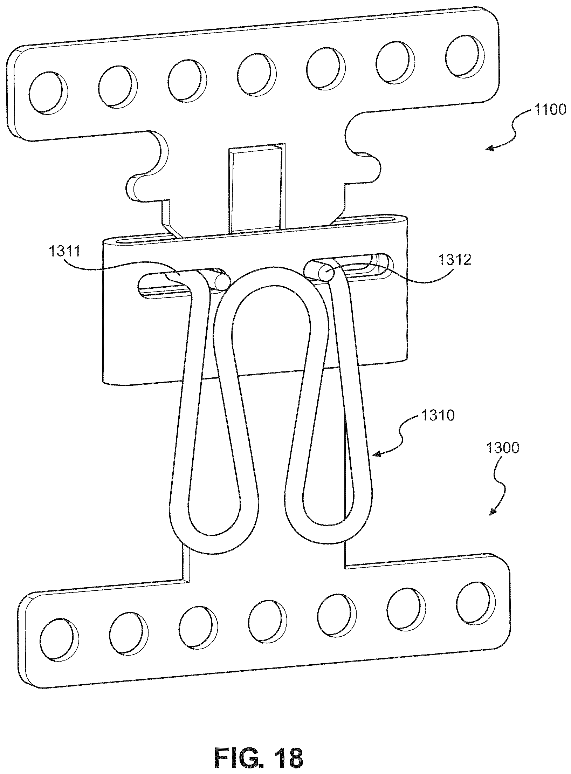

The fastener system 1000 includes a male component 1100, a female component 1300, and a protective sleeve 1200. As shown by the perspective view in FIG. 18 where the protective sleeve 1200 has been removed, the female component 1300 additionally includes a releasable locking spring 1310. The releasable locking spring 1310 includes a first locking segment 1311 and a second locking segment 1312, where the first locking segment 1311 and the second locking segment 1312 are configured to clamp down over notches 1120 in the male component when the fastener system 1000 is in the locked state as shown in FIG. 18.

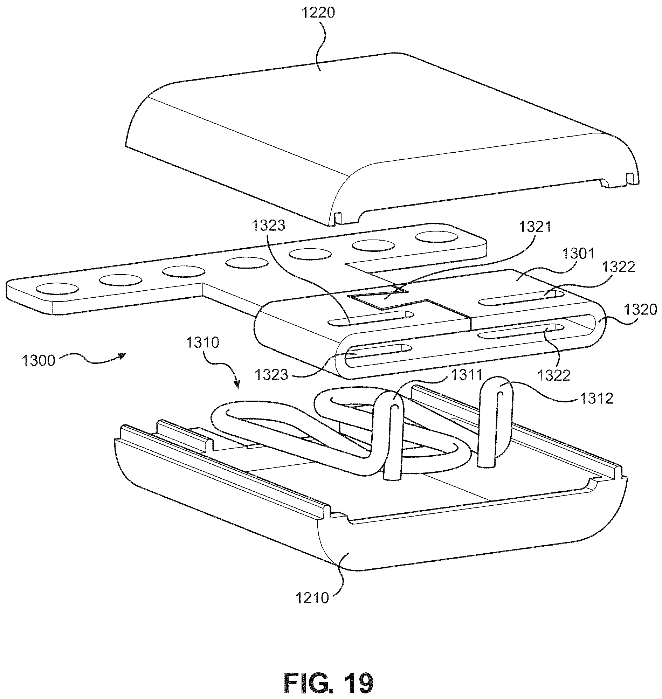

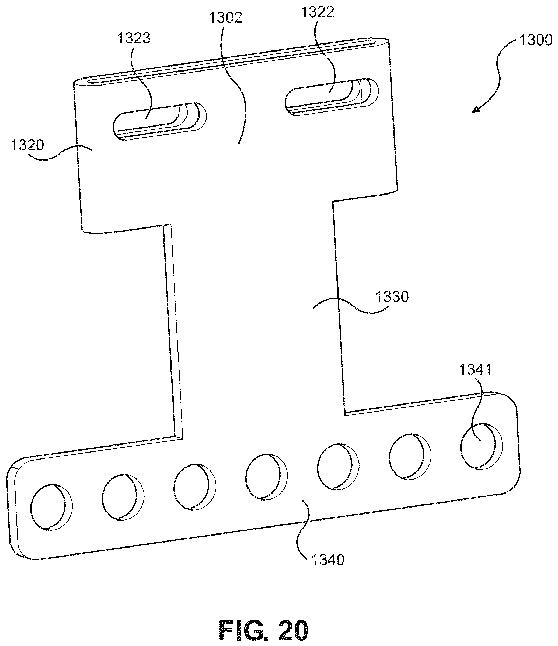

FIG. 19 shows an exploded perspective view of the female component 1300, the releasable locking spring 1310, and the protective sleeve 1200 to demonstrate how the female component 1300 is configured to be installed to be housed within the protective sleeve 1200. The female component 1300 includes a tab head 1320 that is formed by folding two sides of the tab head 1320 and connecting the two sides at a dovetail shaped seam 1321. This way, the tab head 1320 includes a first side 1301 (e.g., the first side 1301 includes the dovetail seam 1321) and a second side 1302 (e.g., the second side 1302 does not include the dovetail seam 1321, as shown in FIG. 20). The tab head 1320 includes a first pair of pass-through slots 1323 and a second pair of pass-through slots 1322. The first locking segment 1311 from the releasable locking spring 1310 is configured to pass through the first pair of pass-through slots 1323, and the second locking segment 1312 from the releasable locking spring 1310 is configured to pass through the second pair of pass-through slots 1322.

As shown, the protective sleeve 1200 is comprised of a first sleeve portion 1210 and a second sleeve portion 1220, where the first sleeve portion 1210 and the second sleeve portion 1220 are configured to attach to each other to house around the tab head 1320. The protective sleeve 1200 may further cover over a top of the tab head 1320 so that during a molding process of the half sleeves 200, the molding polyurethane material does not drip inside the protective sleeve 1200 to interfere with the locking mechanism of the female component 1300.

FIG. 20 shows a perspective view of the female component 1300 alone, where the second side 1302 is shown. The female component 1300 includes the tab head 1320, an anchor section 1340, and a bridge section 1330 that connects the tab head 1320 to the anchor section 1340. The anchor section 1340 is configured to be embedded into the half sleeves 200 at the protrusions 210 (or openings 220 according to other alternative embodiments). To assist in keeping the anchor section embedded within the half sleeves 200, the anchor section 1340 may include one or more anchor openings 1341 so that the polyurethane material may flow through the anchor openings 1341 during the molding of the half sleeves 200, which in turn increases an anchoring force to prevent the anchor section 1340 from being pulled out from the half sleeve 200.

The pass-through slots 1323, 1322 are shaped to allow the locking segments 1311, 1312 to move along a horizontal axis to enable the releasable locking spring 1310 to transition between the locked state and an unlocked state, as will be described in more detail. The female component 1300 may be made from cut sheet metal, or other similar material that enables single piece construction.

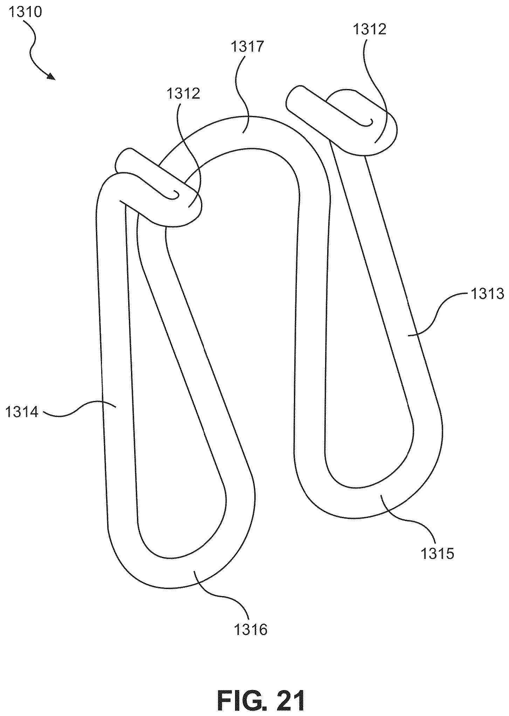

FIG. 21 shows a perspective view of the releasable locking spring 1310 alone. The releasable locking spring 1310 includes the locking segments 1311, 1312, a first locking leg 1313, a first loop 1315 of the first locking leg 1313, a second locking leg 1314, a second loop 1316 of the second locking leg 1314, and a middle loop 1317. As described previously, the first locking segment 1311 is configured to fit into the first pair of pass-through slots 1323, and the second locking segment 1312 is configured to fit into the second pair of pass-through slots 1322, as shown in FIG. 18.

The releasable locking spring 1310 may be made from a metal material, or other suitable material, capable of providing a desired locking force against the notches 1120 in the male component 1100, while also providing flexibility characteristics to be flexed out to an unlocked state when desired and revert back to the locked state.

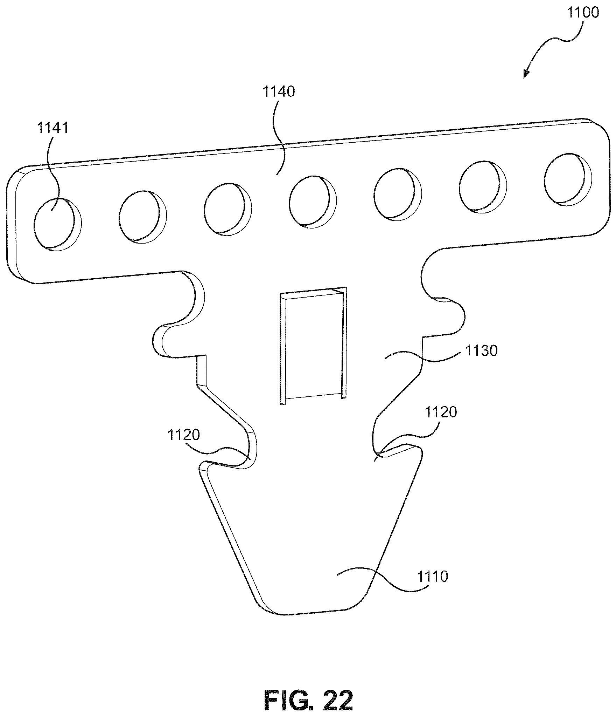

FIG. 22 shows a perspective view of the male component 1100 alone. The male component 1100 includes a nose 1110 configured into a tapered shape having two slanted sides, notches 1120 formed at the ends of the two slanted sides of the nose 1110, an anchoring section 1140, and a bridge section 1130 that connects the nose 1110 to the anchoring section 1140. The nose 1110 is configured to be inserted into the tab head 1320 of the female component 1300, where the locking segments 1311, 1312 pass through their respective pass-through slots 1322, 1323.

The nose 1110 is configured in the tapered shape to enable the nose 1110 to push down past the locking segments 1311, 1312 that are protruding inside the tab head 1320 with a downward force. When the notches 1120 are pushed past the locking segments 1311, 1312 such that the locking segments 1311, 1312 sit within the notches 1120, the male component 1100 will be in the locked state with the female component 1300.

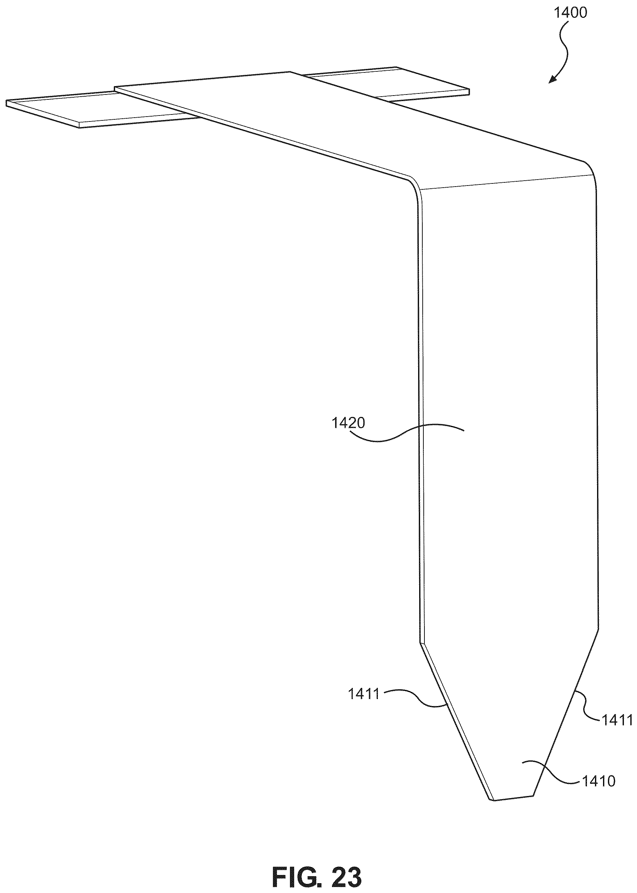

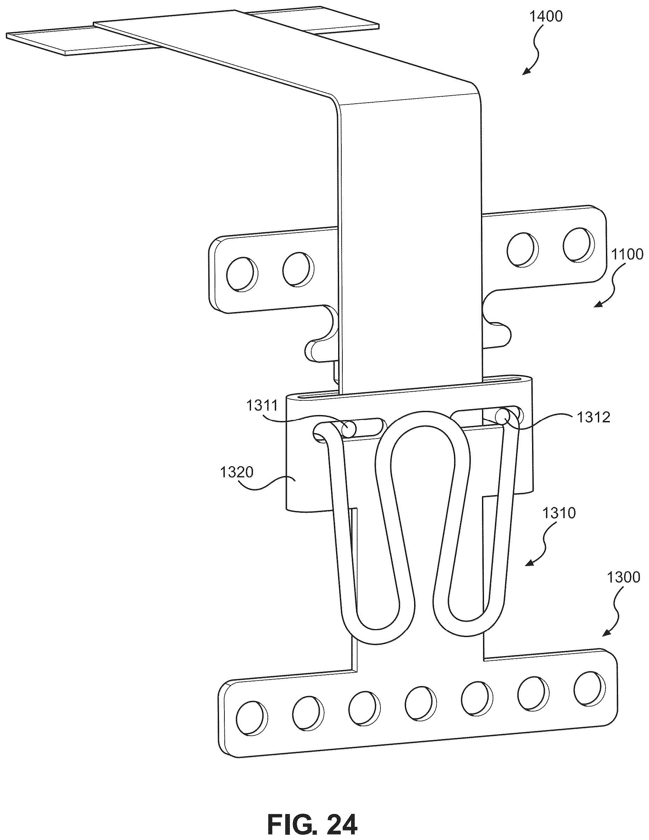

FIG. 23 shows a perspective view of an exemplary release tool 1400 that may be used to release the male component 1100 from its locked state with the female component 1300, according to some embodiments. The release tool 1400 includes a nose 1410 including a tapered shape and slanted sides 1411. The release tool 1400 is formed into a thin profile so that the nose 1410 may be pushed down into the tab head 1320 while the notches 1120 in the nose 1110 from the male component 1100 are in the locked state with the locking segments 1311, 1312 in the releasable locking spring 1310 from the female component 1300, as shown, for example, in FIG. 24.

When the release tool 1400 is pushed down far enough into the tab head 1320, the slanted sides 1411 of the release tool 1400 will push against the locking segments 1311, 1312. When the release tool 1400 is further pushed down with enough force (e.g., a predetermined unlocking force), the locking segments 1311, 1312 will be pushed outward so that the locking segments 1311, 1312 are released from residing inside the notches 1120 of the male component 1100. When the locking segments 1311, 1312 are released from residing inside the notches 1120, then the male component 1100 may be pulled up and out from the tab head 1320 to be released from the locked state and enter into the unlocked state. After the release tool 1400 is removed from the tab head 1320, the locking segments 1311, 1312 will revert back to their locked state positions to provide the locking mechanism for the next time the male component 1100 is inserted, as described herein.

These mating features of the cable protection systems described herein are utilized to provide an effective and efficient installation for assembling the half sleeves around a cable to be protected.

The techniques presented and claimed herein are referenced and applied to material objects and concrete examples of a practical nature that demonstrably improve the present technical field and, as such, are not abstract, intangible, or purely theoretical.

The present disclosure thus describes cable protection systems and methods for installing such cable protection systems as described above. As is readily apparent from the foregoing, various non-limiting embodiments of the systems, devices, and methods have been described. While various embodiments have been illustrated and described herein, they are exemplary only and it is not intended that these embodiments illustrate and describe all those possible. Instead, the words used herein are words of description rather than limitation, and it is understood that various changes may be made to these embodiments without departing from the scope of the following claims.

Further examples of the present disclosure are set out in the following numbered clauses.
1. A releasable fastener system comprising:
   a male component comprising a first anchoring section and a first coupling section, wherein the first anchoring section is configured to be embedded within a portion of a first protective sleeve;
   a female component comprising a second anchoring section and a second coupling section comprising a locking member, wherein the second anchoring section is configured to be embedded within a portion of a second protective sleeve and wherein the locking member is configured to lock the first coupling section to the second coupling section; and
   a shield configured to form a protective housing around the second coupling section.
2. The releasable fastener system of clause 1, further comprising a tool configured to release the first coupling section from the second coupling section.
3. The releasable fastener system of clause 1 or 2, wherein the first coupling section comprises a pin latch.
4. The coupling fastener system of any preceding clause, wherein the shield comprises a plurality of walls and a bottom floor configured to form a seal with the second coupling section.
5. The coupling fastener system of any preceding clause, wherein the locking member is a locking spring.
6. The releasable fastener system of clause 5, wherein the second coupling section comprises a locking plate and wherein the shield is configured to be press-fit with the locking plate to form a protective housing around the locking spring.
7. The coupling fastener system of clause 6, wherein:
   the locking spring comprises a locking loop and a tool loop;
   the locking plate comprises a pin opening and a tool opening; and
   the shield comprises a pin housing and a tool housing,
   wherein the locking loop is positioned between the pin opening and an opening to the pin housing and the tool loop is positioned between the tool opening and an opening to the tool housing.
8. The coupling fastener system of clause 7 when dependent on clause 3, wherein the pin latch is configured to be inserted through the pin opening of the locking plate such that the pin latch is locked by the locking loop of the locking spring and at least a portion of the pin latch is received by the pin housing of the shield.
9. The coupling fastener system of clause 8 when dependent on clause 2, wherein the tool is configured to be inserted through the tool opening of the locking plate and into the tool loop of the locking spring, such that the tool causes the locking loop of the locking spring to expand and release the pin latch.
10. The coupling fastener system of any preceding clause, wherein at least one of:
   at least a portion of the first protective sleeve is configured in a gear shaped design that includes both protrusions and openings, wherein the male component is located on a protrusion or an opening; or
   at least a portion of the second protective sleeve is configured in a gear shaped design that includes both protrusions and openings, wherein the female component is located on a protrusion or an opening.
11. A fastener system comprising:
   a male component comprising a first anchoring section and a first coupling section, wherein the first anchoring section is configured to be embedded within a portion of a first protective sleeve;
   a female component comprising a second anchoring section and a second coupling section comprising a locking member, wherein the second anchoring section is configured to be embedded within a portion of a second protective sleeve and wherein the locking member is configured to clamp the first coupling section to the second coupling section; and
   a sleeve configured to form a protective housing around the second coupling section.
12. The fastener system of clause 11 further comprising a release tool configured to release the first coupling section from the second coupling section.
13. The fastener system of any clause 11 or 12, wherein the sleeve comprises a first sleeve portion and a second sleeve portion, wherein the first sleeve portion and the second sleeve portion are configured to attach to each other around the second coupling section.
14. The fastener system of any preceding clause, wherein the first coupling section comprises a nose comprising at least two notches.
15. The fastener system of any preceding clause, wherein:
   the second coupling section comprises a tab head comprising a first pair of pass-through slots and a second pair of pass-through slots; and
   the locking member is a releasable locking spring comprising a first locking segment and a second locking segment,
   wherein the first locking segment is configured to pass through the first pair of pass-through slots, and the second locking segment is configured to pass through the second pair of pass-through slots.
16. The fastener system of clause 15 when dependent on clause 14, wherein the nose of the male component is configured to be inserted into the tab head of the female component.
17. The fastener system of clause 16, wherein each of the first locking segment and the second locking segment are configured to engage with a respective notch of the nose of the male component such that the male component is clamped by the releasable locking spring.
18. The coupling fastener system of clause 17 when dependent on clause 12, wherein the tool is configured to be inserted into the tab head and thereby cause the first locking segment and the second locking segment of the releasable locking spring to be released from the notches of the nose of the male component.
19. The coupling fastener system of any preceding clause, wherein at least one of:
   at least a portion of the first protective sleeve is configured in a gear shaped design that includes both protrusions and openings, wherein the male component is located on a protrusion or an opening; or
   at least a portion of the second protective sleeve is configured in a gear shaped design that includes both protrusions and openings, wherein the female component is located on a protrusion or an opening.

## Claims

1. A coupling fastener system comprising:
a male coupling fastener comprising a first anchoring section and a first coupling section, wherein the first anchoring section is configured to be embedded within a portion of a first protective sleeve;
a female coupling fastener comprising a second anchoring section and a second coupling section, wherein the second anchoring section is configured to be embedded within a portion of a second protective sleeve and the second coupling section is configured to mate with the first coupling section; and
a shield configured to form a protective housing around the second coupling section.

2. The coupling fastener system of claim 1, the shield comprising an overflow reservoir.

3. The coupling fastener system of any preceding claim, the shield comprising a top flange configured to cover at least a portion of an upper collar on the female coupling fastener, and wherein the top flange is configured to be at least level with a surface of the second protective sleeve when the female coupling fastener is molded into the second protective sleeve.

4. The coupling fastener system of any preceding claim, the shield further comprising a lower fastener seal configured to allow the second anchoring section to pass through while forming a seal against the second anchoring section.

5. The coupling fastener system of any preceding claim, wherein at least one of:
at least a portion of the first protective sleeve is configured in a gear shaped design that includes both protrusions and openings, wherein the male coupling fastener is located on a protrusion or an opening; or
at least a portion of the second protective sleeve is configured in a gear shaped design that includes both protrusions and openings, wherein the female coupling fastener is located on a protrusion or an opening.

6. A coupling fastener system comprising:
a male coupling fastener comprising a first anchoring section and a first coupling section, wherein the first anchoring section is configured to be embedded within a portion of a first protective sleeve;
a female coupling fastener comprising a second anchoring section and a second coupling section, wherein the second anchoring section is configured to be embedded within a portion of a second protective sleeve and the second coupling section is configured to mate with the first coupling section; and
a two-piece shield comprising a shield body and a shield cap, the two-piece shield configured to form a protective housing around the second coupling section.

7. The coupling fastener system of claim 6, the shield body comprising an overflow reservoir.

8. The coupling fastener system of any of claims 6 to 7, wherein the shield cap is configured to cover at least a portion of an upper collar on the female coupling fastener, and the shield cap is at least level with a surface of the second protective sleeve when the female coupling fastener is molded into the second protective sleeve.

9. The coupling fastener system of any of claims 1 to 5 or 6 to 8, the female coupling fastener further comprising at least two strengthening ribs configured to support the protective housing of the shield.

10. The coupling fastener system of any of claims 6 to 9, the shield body comprising a lower fastener seal configured to allow the second anchoring section to pass through while forming a seal against the second anchoring section.

11. The coupling fastener system of any of claims 6 to 10, wherein at least one of:
at least a portion of the first protective sleeve is configured in a gear shaped design that includes both protrusions and openings, wherein the male coupling fastener is located on a protrusion or an opening; or
at least a portion of the second protective sleeve is configured in a gear shaped design that includes both protrusions and openings, wherein the female coupling fastener is located on a protrusion or an opening.

12. A fastener system comprising:
a male component comprising a first anchoring section and a retaining tab, wherein the first anchoring section is configured to be embedded within a portion of a first protective sleeve; and
a female component comprising a second anchoring section and a torsion ramp, and wherein the second anchoring section is configured to be embedded within a portion of a second protective sleeve and the retaining tab is configured to be pressed down the torsion ramp until the retaining tab moves past a bottom retaining face of the torsion ramp to reach a locked state, wherein an increasing torsion force is applied to the retaining tab as the retaining tab travels down the torsion ramp until the retaining tab moves past the bottom retaining face.

13. The fastener system of claim 12, wherein at least one of:
the first anchoring section includes an anchoring hole; or
the second anchoring section includes an anchoring hole.

14. The fastener system of any of claims 12 to 13, wherein at least one of:
at least a portion of the first protective sleeve is configured in a gear shaped design that includes both protrusions and openings, wherein the male component is located on a protrusion or an opening; or
at least a portion of the second protective sleeve is configured in a gear shaped design that includes both protrusions and openings, wherein the female component is located on a protrusion or an opening.

15. A releasable fastener system comprising:
a male component comprising a first anchoring section and a first coupling section, wherein the first anchoring section is configured to be embedded within a portion of a first protective sleeve;
a female component comprising a second anchoring section and a second coupling section comprising a locking member, wherein the second anchoring section is configured to be embedded within a portion of a second protective sleeve and wherein the locking member is configured to lock or clamp the first coupling section to the second coupling section; and
a shield configured to form a protective housing around the second coupling section, or a sleeve configured to form a protective housing around the second coupling section.
